# EUROPÄISCHE PATENTSCHRIFT

(11) **EP 3 206 896 B1**
(45) Veröffentlichungstag und Bekanntmachung des Hinweises auf die Patenterteilung: **17.10.2018**
(21) Anmeldenummer: 16763043.3
(22) Anmeldetag: 09.09.2016
(51) Int. Cl.: B60C 23/04

(54) **VERFAHREN ZUM ZUORDNEN VON KENNUNGEN VON RADELEKTRONIKEN EINES REIFENDRUCKÜBERWACHUNGSSYSTEMS EINES FAHRZEUGS ZU DEN POSITIONEN DER RÄDER AN DEM FAHRZEUG**
METHOD FOR ALLOCATING IDENTIFIERS OF RESPECTIVE WHEEL MODULES OF A TIRE PRESSURE MONITORING SYSTEM
METHODE DE DETERMINATION DE POSITIONS DE MODULES RESPECTIFS DE ROUE D' UN SYSTEME DE SURVEILLANCE DE PRESSIONS DE PNEUMATIQUES.

(30) Priorität: 18.09.2015 DE 102015115818; 23.12.2015 DE 102015122820
(43) Veröffentlichungstag der Anmeldung: 23.08.2017
(73) Patentinhaber: Huf Hülsbeck & Fürst GmbH & Co. KG, 42551 Velbert (DE)
(72) Erfinder: ALEXANDER, Markus, 76287 Rheinstetten (DE); KESSLER, Ralf, 76327 Pfinztal (DE); WAGNER, Markus, 71638 Ludwigsburg (DE)
(74) Vertreter: Twelmeier Mommer & Partner
(86) Internationale Anmeldenummer: PCT/EP2016/071251
(87) Internationale Veröffentlichungsnummer: WO 2017/046003

(56) Entgegenhaltungen:
- DE-A1-102009 001 074
- DE-B4- 19 856 861
- US-A1- 2012 194 333

## Beschreibung

Die Erfindung betrifft ein Verfahren zum Zuordnen von Kennungen, die in Signalen enthalten sind, welche von Baugruppen eines Reifendrucküberwachungssystems eines Fahrzeuges ausgesandt werden zu den Positionen der Räder des Fahrzeugs, an welchen die Baugruppen angebracht sind. Die an den Rädern des Fahrzeuges angebrachten Baugruppen werden nachfolgend als Radelektroniken bezeichnet. Jede Radelektronik enthält einen Drucksensor, welcher auf den Reifendruck des Rades anspricht, und einen Sensor, der auf Stöße anspricht, z. B. einen auf radiale Beschleunigungen ansprechenden Sensor. Vorzugsweise enthält die Radelektronik auch einen Beschleunigungssensor, welcher eine Information über die Drehzahl des Rades liefert. Außerdem enthält die Radelektronik einen Speicher, in welchem die individuelle Kennung der Radelektronik gespeichert ist, und einen Sender, welcher Signale, die nicht nur die individuelle Kennung, sondern auch eine Information über den Reifendruck, über am Rad auftretende Stöße, ggf. auch über die Drehzahl des jeweiligen Rades enthalten, an einen Empfänger überträgt, der mit einer an der Karosserie des Fahrzeugs vorgesehenen Antenne sowie mit einer Auswerteeinrichtung versehen oder verbunden ist. Die Antenne ist üblicherweise an der Unterseite der Karosserie angebracht. Sie kann mit dem Empfänger, der die empfangenen Signale dekodiert und gegebenenfalls verstärkt und/oder auf andere Weise aufbereitet, mittels eines Kabels verbunden sein oder mit der Antenne ganz oder teilweise zu einer Baugruppe zusammengefasst sein. Die Auswerteeinrichtung ist im Allgemeinen in einiger Entfernung von der Antenne im Motorraum oder im Innenraum des Fahrzeugs, z.B. hinter dem Armaturenbrett, angeordnet. Der Empfänger kann mit der Auswerteeinrichtung zu einer Baugruppe zusammengefasst oder getrennt davon verwirklicht sein. Schließlich kann der Empfänger auch aufgeteilt sein in einen der Antenne zugeordneten Teil und einen der Auswerteeinrichtung zugeordneten Teil.

Die Auswerteeinrichtung, manchmal auch als Zentraleinheit des Reifendrucküberwachungssystems bezeichnet, wertet die von den Radelektroniken übertragenen Signale aus und zeigt dem Fahrer Anomalien des Reifendrucks an, wozu die Auswerteeinrichtung im Allgemeinen mit einer im Armaturenbrett des Fahrzeugs vorgesehenen Anzeigeeinrichtung verbunden ist. Die Verbindungen zwischen der Auswerteeinrichtung und der Anzeigeeinrichtung und gegebenenfalls zum Empfänger erfolgen üblicherweise über Kabel, z.B. über ein im Fahrzeug vorgesehenes BUS-System.

Damit die Auswerteeinrichtung anzeigen kann, an welchem Rad eine Anomalie des Reifendrucks auftritt, muss sie wissen, an welchem Rad sich eine Radelektronik befindet, welche die Anomalie des Reifendrucks signalisiert. Zu diesem Zweck übertragen die Radelektroniken in ihren Signalen zusammen mit einer Information über den Reifendruck die individuelle Kennung, bei der es sich üblicherweise um eine Ziffernfolge handelt, welche die individuelle Radelektronik eindeutig kennzeichnet. Damit die Auswerteeinrichtung eine ihr übermittelte Ziffernfolge einem bestimmten Rad bzw. einer bestimmten Radposition zuordnen kann, müssen ihr vorab die Kennungen der im Fahrzeug verbauten Radelektroniken und deren Zuordnung zu den Radpositionen mitgeteilt und in der Auswerteeinrichtung oder in einem mit der Auswerteeinrichtung verbundenen Speicher gespeichert werden. Dazu sind Zuordnungsverfahren bekannt.
Aus der DE 10 2009 001 074 A1 ist ein Verfahren zum Zuordnen von Kennungen, die in Signalen enthalten sind, welche von Radelektroniken ausgesandt werden, zu den Positionen der Räder am Fahrzeug bekannt, wobei die Radelektroniken jeweils mehrere Sensoren, von denen einer auf den Reifendruck und ein anderer auf am Rad auftretende Stöße anspricht, einen Speicher mit der darin gespeicherten individuellen Kennung der jeweiligen Radelektronik und einen Sender aufweisen, der Signale an einen Empfänger überträgt, welche die individuelle Kennung der betreffenden Radelektronik und Informationen über das Auftreten von Stößen an dem betreffenden Rad enthalten. Der Empfänger ist mit einer Antenne sowie einer Auswerteeinrichtung verbunden, der außerdem ein Geschwindigkeitssignal zugeführt wird. Die Auswerteeinrichtung erfasst die in den Signalen enthaltenen Kennungen, misst die Zeitspanne zwischen Stoßsignalen, die aufeinanderfolgend empfangen werden, und ordnet die Kennung jenes Signals, welches als Ergebnis des Vergleichs die höhere Intensität aufweist, jener Achse zu, auf welcher sich das Rad mit jener Radelektronik befindet, für deren Signal aufgrund der gegebenen Anordnung der Antenne des Empfängers und bei gleicher Sendeleistung der Radelektroniken das mit der größeren Intensität empfangene Signal stammt als von einer auf der anderen Achse angeordneten Radelektronik.

Aus der US 2012/0194333 A1 ist ein ähnliches Verfahren zum Zuordnen von Kennungen bekannt, wobei gemessene Zeitspannen zwischen aufeinanderfolgenden Stößen mit der Geschwindigkeit des Fahrzeugs multipliziert werden.

Aus der EP 0 806 306 B1 ist es bekannt, in der Radelektronik einen Bewegungssensor, nämlich einen Beschleunigungssensor, vorzusehen, der auf am Rad auftretende radiale Beschleunigungen und/oder tangentiale Beschleunigungen anspricht. Ein solcher Beschleunigungssensor erlaubt nicht nur, zwischen einem ruhenden Fahrzeug und einem stehenden Fahrzeug zu unterscheiden, sondern er liefert auch eine Information über die Drehzahl des Rades. Der Radialbeschleunigung und der Tangentialbeschleunigung eines Rades ist nämlich die Gravitationsbeschleunigung überlagert, deren Einfluss bei jeder Umdrehung des Rades zweimal sein Vorzeichen wechselt. Der Kehrwert der Zeitspanne zwischen je zwei Vorzeichenwechseln der von der Gravitationsbeschleunigung verursachten Überlagerung des Beschleunigungssignals ist der Drehzahl des Rades proportional.

Das aus der EP 0 806 306 B1 bekannte Verfahren vergleicht die vom Beschleunigungssensor in der Radelektronik gewonnene Drehzahl mit den Drehzahlen, welche für denselben Zeitraum von ABS-Sensoren an den Rädern des Fahrzeuges geliefert werden. Wird eine Übereinstimmung der von der Radelektronik stammenden Drehzahlmessung mit einer von einem ABS-Sensor stammenden Drehzahlmessung festgestellt, dann wird angenommen, dass der ABS-Sensor und die betreffende Radelektronik derselben Radposition, z.B. am Fahrzeug vorne links, zugeordnet sind. Voraussetzung dafür ist allerdings, dass die von der Radelektronik stammende Drehzahlmessung mit der Drehzahlmessung von nur einem der ABS-Sensoren übereinstimmt. Die Kennung wird dann unter der Position des ABS-Sensors gespeichert, von welchem das übereinstimmende Drehzahlsignal kam. Bei künftigen Signalen, die dieselbe Kennung enthalten, weiß die Auswerteeinrichtung dann, von welchem Rad bzw. von welcher Radposition, z.B. vorne links, das Signal stammt.

Das bekannte Zuordnungsverfahren setzt voraus, dass die Räder beim Drehzahlvergleich Unterschiede in den Drehzahlen aufweisen. Diese Unterschiede können unterschiedliche Ursachen haben, z.B. Schlupf zwischen Rad und Fahrbahn, unterschiedliche Rollradien infolge unterschiedlicher Reifengrößen oder infolge unterschiedlicher Belastungen oder infolge unterschiedlicher Reifendrücke und insbesondere infolge von Kurvenfahrt. Räder auf der Kurvenaußenseite legen stets einen größeren Weg zurück als Räder auf der Kurveninnenseite und drehen sich deshalb schneller als die Räder auf der Kurveninnenseite. Die Drehzahlunterschiede zwischen den Rädern eines Fahrzeuges können gering sein, bei Geradeausfahrt sogar verschwindend gering. Die EP 0 806 306 B1 fordert deshalb, dass zwei Drehzahlwerte, von denen einer mit Hilfe des Beschleunigungssensors in einer Radelektronik und einer mit Hilfe eines ABS-Sensors gemessen wurde, nur dann als übereinstimmend gewertet werden, wenn sie bis auf messtechnisch nicht zu vermeidende Ungleichheiten übereinstimmen. Nur wenn eine solche hochgradige Übereinstimmung ein einziges Mal für nur einen der ABS-Sensoren festgestellt wird, wird die Kennung der Radelektronik genau dem ABS-Sensor zugeordnet, der das übereinstimmende Drehzahlsignal geliefert hat. Das hat den Nachteil, dass es sehr lange dauern kann, bis die Auswerteeinrichtung alle Kennungen, die sie empfängt, jeweils einem bestimmten ABS-Sensor und damit einer bestimmten Radposition zugeordnet hat. Außerdem ist das bekannte Verfahren anfällig für fehlerhafte Zuordnungen. Solange die Kennungen der am Fahrzeug verbauten Radelektroniken aber nicht zutreffend den Radpositionen zugeordnet sind, ist eine zuverlässige Reifendruckkontrolle nicht möglich. Das aus der EP 0 806 306 B1 bekannte Verfahren hat daher keinen Eingang in die Praxis gefunden.

Aus der DE 198 56 861 B4 ist ein automatisches Zuordnungsverfahren bekannt, welches über die Auswertung einer Drehrichtungsinformation, welche von einem Beschleunigungssensor in der jeweiligen Radelektronik geliefert wird, und aus den empfangenen Signalpegeln eine eindeutige Zuordnung der Kennungen zu den Radpositionen ermöglicht. Das erfordert jedoch die Anordnung der Empfangsantenne an einer außermittig gelegenen Stelle des Karosseriebodens als Voraussetzung dafür, dass die Signale, die von den Radelektroniken mit gleicher Leistung gesendet werden, von der Empfangsantenne mit unterschiedlichen Signalpegeln empfangen werden. Diese an sich gute Möglichkeit, ein Zuordnungsverfahren rasch und zuverlässig durchzuführen, verbietet sich jedoch, wenn für die Empfangsantenne eine zentrale Position gewünscht wird, an welcher sie Signale aus allen Richtungen möglichst gleich gut empfangen kann, z.B. auch die Signale eines Funkschlüssels, welche aus beliebiger Richtung auf die Empfangsantenne treffen können.

Aus der EP 0 861 159 B1 ist es bekannt, allein aus der Intensität der von einer oder mehreren Antennen empfangenen Signale durch statistische Auswertung der gemessenen Intensitäten die Zuordnung der Kennungen zu den verschiedenen Radpositionen zu ermitteln. Die zur DE 19 856 861 B4 angegebenen Nachteile treffen auch auf die EP 0 861 159 B1 zu. Hinzu kommt als weiterer Nachteil, dass das Zuordnungsverfahren umso länger dauert, je weniger Empfangsantennen mit dem Empfänger verbunden sind. Mit nur einer Empfangsantenne ist die Dauer des Zuordnungsverfahrens am längsten und sind die Möglichkeiten zum Positionieren der Antenne sehr begrenzt, weil die Antenne Signale von allen Radelektroniken empfangen können muss und die empfangenen Intensitäten sich voneinander unterscheiden müssen.

Ein Verfahren mit den Merkmalen des Oberbegriffs des Anspruchs 1 ist aus der DE 10 2011 050 636 B4 bekannt. In diesem Verfahren erfasst die Auswerteeinrichtung die in den empfangenen Signalen enthaltenen Kennungen, misst die Zeitspanne zwischen Stoßsignalen, die aufeinanderfolgend empfangen wurden,
multipliziert die gemessene Zeitspanne mit einer in derselben Zeitspanne gemessenen und der Auswerteeinrichtung gemeldeten Geschwindigkeit des Fahrzeugs,
überprüft, ob die durch diese Multiplikation gebildete Länge innerhalb einer vorgegebenen Toleranz mit einem gegebenen Achsabstand des Fahrzeuges übereinstimmt,
ordnet im Falle der Übereinstimmung die Kennung, die in dem Signal enthalten war, welches die Information über den ersten von zwei aufeinanderfolgend erfassten Stößen enthielt, einer vorderen der beiden Achsen zu und ordnet die Kennung, die in dem Signal enthalten war, welches die Information über den zweiten der beiden aufeinanderfolgend erfassten Stöße enthielt, der hinteren der beiden Achsen zu, wenn die Signale bei Vorwärtsfahrt empfangen werden.

Dieses Verfahren nutzt nur eine einzige Antenne für den Empfang der Signale. Das Ermitteln einer für das Verfahren geeigneten Antennenposition ist aufwändig und ist häufig erst kurz vor dem Produktionsbeginn einer Fahrzeugserie möglich. Radelektroniken, die aus einer für die Empfängerantenne ungünstigen Position senden, sind besonders schwierig zuzuordnen, ihre Zuordnung kann besonders lange dauern.

Um deutlich zwischen Signalen, die von vorderen Rädern kommen, und Signalen, die von hinteren Rädern kommen, unterscheiden zu können, ist es bei einem zweiachsigen Fahrzeug zweckmäßig, die Empfangsantenne nahe bei der Vorderachse oder nahe bei der Hinterachse des Fahrzeuges anzubringen. Um anhand der Signalstärke zwischen Signalen, die von Rädern auf der rechten Seite des Fahrzeuges kommen, und Signalen, die von Rädern auf der linken Seite des Fahrzeuges kommen, unterscheiden zu können, ist es zweckmäßig, die Empfangsantenne abseits der senkrechten Längsmittelebene des Fahrzeuges anzubringen. Die vorstehend genannten einschränkenden Vorgaben für den Ort der Empfangsantenne können nicht immer eingehalten oder nur unvollkommen eingehalten werden. Dieser Nachteil wird noch dadurch verstärkt, dass die Sender der Radelektroniken bedingt durch Fertigungstoleranzen unterschiedliche Sendeleistungen aufweisen können, dass die am Fahrzeug montierten Reifen die ausgesendeten Signale unterschiedlich stark dämpfen können und dass die Signale abhängig von der Stellung der sich drehenden Räder durch Bauteile des Fahrzeuges unterschiedlich stark abgeschirmt werden können.

Ungeachtet dieser Schwierigkeiten gibt es Fahrzeughersteller, die verlangen, dass bei jedem Neustart des Fahrzeuges das komplette Zuordnungsverfahren ablaufen soll, und zwar aus Sicherheitsgründen möglichst schnell und mit möglichst wenig Sendevorgängen, um die Lebensdauer der in den Radelektroniken angeordneten Batterie durch die häufigen Zuordnungsverfahren möglichst wenig zu verkürzen, denn die Batterie kann normalerweise nicht ersetzt werden.

Es ist die Aufgabe der vorliegenden Erfindung, eine Lösung für die einander widersprechenden Zielvorgaben für das Zuordnungsverfahren zu finden.

Diese Aufgabe wird für ein Zuordnungsverfahren, welches mindestens eine Unterscheidung zwischen Vorderrädern und Hinterrädern des Fahrzeuges ermöglicht, durch ein Verfahren mit den im Anspruch 1 angegebenen Merkmalen gelöst. Vorteilhafte Weiterbildungen der Erfindung sind Gegenstand der abhängigen Ansprüche.

Das erfindungsgemäße Verfahren hat den großen Vorteil, dass das aus der DE 2011 050 636 B4 bekannte Verfahren - welches durch Auswertung von Stoßsignalen zwischen Signalen, die von Rädern auf einer vorderen Achse stammen, und Signalen, die von Rädern auf einer hinteren Achse stammen, unterscheiden kann - verkürzt werden kann, wenn gleichzeitig zur Unterscheidung von Signalen, die von Rädern auf der vorderen Achse herkommen, und Signalen, die von Rädern auf der hinteren Achse herkommen, eine Auswertung der Stärke der empfangenen Signale erfolgt. Diese beiden an sich bekannten Verfahren können dadurch abgekürzt werden, dass weder bei der Auswertung der Signalstärken der empfangenen Signale noch bei der Auswertung der empfangenen Stoßsignale gewartet wird, bis sich das aus dem jeweiligen Verfahren ergebende Zuordnungsergebnis so weit stabilisiert hat, dass man bereits aus jedem einzelnen dieser beiden Verfahren, für sich genommen, zuverlässig die zutreffenden Zuordnungen erhalten würde. Vielmehr können beide Zuordnungsverfahren schon früher beendet werden, nämlich dann, wenn sich in einem der beiden Verfahren eine Tendenz zu Gunsten einer bestimmten Zuordnung abzeichnet und in dem anderen Verfahren sich eine Tendenz zu Gunsten derselben Zuordnung abzeichnet. Die sich in beiden Verfahren abzeichnenden Tendenzen zu Gunsten derselben Zuordnung mögen zwar einzeln, für sich genommen, nicht ausreichend sein, um daraus zuverlässig zu schließen, dass die sich abzeichnende Zuordnung zutreffend ist, aber wenn sich in beiden Verfahren eine Tendenz zu Gunsten derselben Zuordnung abzeichnet, ist die Wahrscheinlichkeit viel größer, dass es sich um eine zutreffende Zuordnung handelt. Deshalb können die beiden zeitlich parallel laufenden Zuordnungsverfahren verkürzt und damit die Zuordnung insgesamt nach einer geringeren Anzahl von Sendevorgängen als im Stand der Technik erfolgreich abgeschlossen werden.

Das im Rahmen der Erfindung zur Anwendung kommende und einen Teil der Erfindung bildende Verfahren, bei welchem die von den verschiedenen Radelektroniken ausgesendeten Signale von einer einzigen Antenne empfangen werden und die Intensität der empfangenen Signale ausgewertet wird, beruht auf der Erfahrungstatsache, dass bei einer vorgegebenen Lage der empfangenden Antenne die von den Radelektroniken ausgesendeten Signale im Mittel mit unterschiedlichen Intensitäten empfangen werden, so dass man - wenn die Anzahl der ausgewerteten Signale groß genug ist - feststellen kann, welche Kennung welcher Radposition zuzuordnen ist. Die statistische Auswertung der Intensitäten der empfangenen Signale kann zum Beispiel so erfolgen, dass die von der Auswerteeinrichtung registrierten Intensitäten der Signale unter der jeweiligen Kennung, welche im empfangenen Signal enthalten ist, addiert werden. Je größer die Anzahl der Signale ist, deren Intensitäten unter der zugehörigen Kennung addiert werden, desto deutlicher bilden sich Unterschiede in den Summen der Intensitäten aus, so dass diese eine Rangfolge bilden, nach welcher die Kennungen erfahrungsgemäß den jeweiligen Radpositionen zugeordnet werden können. Wenn man zum Beispiel aus Erfahrung weiß, dass bei einem zweiachsigen Fahrzeug Signale, die vom linken Vorderrad kommen, im Mittel mit der größten Intensität empfangen werden, dass Signale, die vom rechten Vorderrad kommen, im Mittel mit der zweitgrößten Intensität empfangen werden, dass Signale, welche vom linken Hinterrad kommen, im Mittel mit der drittgrößten Intensität empfangen werden, und dass Signale, welche vom rechten Hinterrad kommen, im Mittel mit der geringsten Intensität empfangen werden, dann wird sich diese Rangfolge in den Summen der den einzelnen Kennungen jeweils zugeordneten Intensitäten umso deutlicher ausbilden, je mehr Signale ausgewertet wurden.

Eine andere Möglichkeit besteht darin, dass man lediglich registriert, wie häufig ein Signal mit einer bestimmten Kennung mit der höchsten Intensität empfangen wurde, wie häufig ein Signal mit einer bestimmten anderen Kennung mit der zweithöchsten Intensität empfangen wurde, wie häufig ein Signal mit einer bestimmten dritten Kennung mit der dritthöchsten Intensität empfangen wurde, und wie häufig ein Signal mit einer bestimmten vierten Kennung mit der niedrigsten Intensität empfangen wurde. Bei dieser vereinfachten Auswertung kann man anhand der den einzelnen Kennungen jeweils zugeordneten Zählerstände ebenfalls darauf schließen, welche Kennung welcher Radposition zuzuordnen ist. Zu weiteren Möglichkeiten der statistischen Auswertung der registrierten Intensitäten wird auf die EP 0 861 160 B1 Bezug genommen.

Wie deutlich sich in den beiden Verfahren eine Tendenz zu Gunsten einer übereinstimmenden Zuordnung abzeichnen muss, damit zuverlässig auf eine zutreffende Zuordnung geschlossen werden kann, hängt vom jeweiligen Typ des Fahrzeugs und seiner Reifen, von den Radelektroniken und vom Empfänger ab und kann vor Beginn der Serienfertigung des Fahrzeuges durch Versuche ermittelt werden, deren Durchführung im Können des Fachmanns liegt. So kann man zum Beispiel eine Versuchsreihe durchführen, in der man mit einer Verfahrensdauer beginnt, die für jedes einzelne der beiden Zuordnungsverfahren im Stand der Technik für eine zutreffende Zuordnung genügt hat. Dann kann man die Verfahrensdauer schrittweise verkürzen und in jedem Schritt überprüfen, ob sich eine in beiden Verfahren abzeichnende Tendenz zu Gunsten einer übereinstimmenden Zuordnung als zutreffend erweist. Sobald man bei diesen Versuchen erstmals feststellt, dass das Verfahren nicht mehr zu einer zutreffenden Zuordnung geführt hat, weiß man, dass man für die anzusetzende Dauer des Zuordnungsverfahrens eine Grenze erreicht hat, die man nicht unterschreiten sollte. Erhöht man diese Dauer um einen Sicherheitszuschlag, gelangt man zu einer Verfahrensdauer für die Zuordnung, die erfindungsgemäß kürzer ist als für die Zuordnung nur mittels eines bekannten Verfahrens zur Stoßauswertung oder nur mittels eines bekannten Verfahrens der Auswertung der Intensität der von der Empfangsantenne empfangenen Signale, und die erfindungsgemäß trotzdem zu einer zutreffenden Zuordnung führt.

Ob die Vorderachse die in Fahrtrichtung gesehen vordere Achse ist oder ob die Hinterachse die in Fahrtrichtung gesehen vordere Achse ist, kann zum Beispiel aus der Stellung des Schaltgetriebes des Fahrzeuges abgeleitet und der Auswerteeinrichtung gemeldet werden. Man kann das Verfahren aber auch so durchführen, dass es nur während der Vorwärtsfahrt des Fahrzeuges durchgeführt wird. Um das sicherzustellen, kann auch in diesem Fall die Schaltstellung des Schaltgetriebes von der Auswerteeinrichtung abgefragt oder an die Auswerteeinrichtung gemeldet werden. Alternativ kann das Ausgangssignal eines elektronischen Tachometers ausgewertet werden, welches bei Rückwärtsfahrt ein anderes Vorzeichen als bei Vorwärtsfahrt hat. Es ist auch möglich, das Verfahren nur oberhalb einer vorgegebenen Mindestgeschwindigkeit durchzuführen, welche bei Rückwärtsfahrt im Allgemeinen nicht überschritten wird, zum Beispiel oberhalb von 20 km/h. Eine andere Möglichkeit besteht darin, in der Radelektronik jeweils einen auf Tangentialbeschleunigungen des Rades ansprechenden Beschleunigungssensor vorzusehen, dessen Ausgangssignal bei einer Drehrichtungsumkehr sein Vorzeichen wechselt. In diesem Fall kann bereits in der Radelektronik zwischen Vorwärtsfahrt und Rückwärtsfahrt unterschieden werden und können Sendevorgänge bei Rückwärtsfahrt unterbleiben.

Zur Unterscheidung von Kennungen, die zu Radelektroniken an Rädern auf der linken Fahrzeugseite gehören, und Kennungen, die zu Radelektroniken an Rädern auf der rechten Fahrzeugseite gehören, ist in den Radelektroniken vorzugsweise ein Sensor vorgesehen, welcher eine Information über die Drehrichtung des jeweiligen Rades liefert und welche in dem Signal, das die individuelle Kennung der betreffenden Radelektroniken enthält, an den Empfänger übertragen wird. In diesem Fall erfasst die Auswerteeinrichtung zusätzlich die Drehrichtungsinformationen, unterscheidet auf der Grundlage der erfassten Drehrichtungsinformationen zwischen Kennungen, die zu Radelektroniken an Rädern auf der linken Fahrzeugseite gehören, und Kennungen, die zu Radelektroniken an Rädern auf der rechten Fahrzeugseite gehören, und unterscheidet Stöße, die ihr von Radelektroniken auf der linken Fahrzeugseite gemeldet werden, von Stößen, die ihr von Radelektroniken auf der rechten Fahrzeugseite gemeldet werden. Auf diese Weise liefert das Verfahren nicht nur Erkenntnisse darüber, ob eine bestimmte Kennung zu einem Rad auf der vorderen Achse oder auf der hinteren Achse gehört, sondern liefert darüber hinaus noch die Erkenntnis, ob es sich dabei um ein Rad auf der rechten Fahrzeugseite oder auf der linken Fahrzeugseite handelt, so dass z. B. bei einem Fahrzeug mit vier Rädern allen vier Kennungen eindeutig eine Radposition zugeordnet werden kann. Ein eventuell mitgeführtes Reserverad kann zwar auch mit einer Radelektronik ausgerüstet sein, sendet aber keine Signale aus, solange sich das Reserverad nicht dreht.

Treten zwei Stöße gleichzeitig an zwei Rädern mit unterschiedlicher Drehrichtung auf, dann kann man davon ausgehen, dass sie von einem rechten Rad und einem linken Rad auf einer gemeinsamen Achse stammen. Derartige Ereignisse können ihre Ursache in Änderungen der Fahrbahnbeschaffenheit haben, die sich über die gesamte Breite der Fahrspur erstrecken, wie z. B. Änderungen des Fahrbahnbelags oder Dehnungsfugen oder Stufen in der Fahrbahn. Gleichzeitiges Auftreten ist hier nicht im strengen mathematischen Sinn von "gleichzeitig" zu verstehen, sondern in einem praktischen Sinn als Auftreten in einer Zeitspanne, die von der Fahrgeschwindigkeit abhängt und z. B. gewonnen wird, indem man einen Weg, welcher klein gegen den Achsabstand im Fahrzeug ist, durch die Fahrgeschwindigkeit teilt, sodass die Zeitspanne, in welcher ein Auftreten von zwei Stößen als gleichzeitig aufgefasst wird, jedenfalls wesentlich kürzer ist als der zeitliche Abstand, in welchem die Fahrbahnunebenheit zwei Stöße in zwei Rädern bewirkt, welche sich auf hintereinander angeordneten Achsen befinden.

Die Fahrbahnunebenheit, welche gleichzeitig Stöße in zwei Rädern auf einer ersten Achse bewirkt, wird auch in den - bezogen auf die Fahrtrichtung - nachfolgenden Rädern gleichzeitige Stöße bewirken, sodass die mit den gleichzeitig auftretenden Stoßsignalen übertragenen Kennungen eindeutig den aufeinander folgenden Achsen zugeordnet werden können. Durch das Berücksichtigen von gleichzeitig auftretenden Stößen an Rädern mit unterschiedlicher Drehrichtung kann das Zuordnungsverfahren infolgedessen schneller beendet werden.

Zum Bestimmen der Drehrichtung des Rades wird vorzugsweise ein Beschleunigungssensor verwendet, insbesondere ein Beschleunigungssensor, der auf Tangentialbeschleunigungen des Rades anspricht. Als Tangentialbeschleunigung wird hier die beim Beschleunigen oder beim Verzögern des Fahrzeuges in Umfangsrichtung des Rades auftretende Beschleunigungskomponente bezeichnet. Wenn die Radelektroniken in bezüglich des Rades übereinstimmender Einbaulage an den Rädern des Fahrzeuges montiert sind, dann erlaubt das Vorzeichen des Beschleunigungssignals eine Unterscheidung zwischen rechten und linken Rädern. Ein Beschleunigungssensor an einem Rad auf der rechten Seite des Fahrzeuges und ein Beschleunigungssensor an einem Rad auf der linken Seite des Fahrzeuges liefern bei beschleunigtem oder verzögertem Fahrzeug Beschleunigungssignale mit entgegengesetzten Vorzeichen.

Die Drehrichtung eines Rades kann aber auch durch die Auswertung der Signale von zwei Beschleunigungssensoren erfolgen, welche in unterschiedlicher Ausrichtung am Rad angebracht sind, insbesondere ein auf Radialbeschleunigungen ansprechender Sensor und ein rechtwinklig dazu angeordneter Sensor, welcher auf Tangentialbeschleunigungen anspricht. Die Beschleunigungssensoren können zugleich als Stoßsensoren verwendet werden. Das gilt insbesondere für den auf Radialbeschleunigungen ansprechenden Sensor.

Da der Start des Fahrzeuges mit einer Beschleunigungsphase beginnt, empfiehlt es sich, in der anfänglichen Beschleunigungsphase festzustellen, welche der von der Auswerteeinrichtung empfangenen Kennungen zu Rädern auf der linken Seite des Fahrzeuges und welche zu Rädern auf der rechten Seite des Fahrzeuges gehören. Danach muss nur noch bestimmt werden, auf welcher Achse ein Rad angeordnet ist, welches eine bestimmte Kennung aussendet, um diese Kennung einer bestimmten Radposition zuordnen zu können. Festzustellen, welche Räder sich auf der rechten Seite und welche Räder sich auf der linken Seite des Fahrzeuges befinden, erfordert viel weniger Zeit als durch Auswerten von Stoßsignalen und Signalintensitäten das Zuordnungsverfahren zu Ende zu bringen, so dass die Unterscheidung zwischen rechten und linken Rädern für die Dauer des Zuordnungsverfahrens nicht entscheidend ist.

Die Erfindung macht es sich zu Nutze, dass Unebenheiten der Fahrbahn, über die das Fahrzeug hinweg fährt, häufig nur von den Rädern auf der rechten Fahrzeugseite oder von den Rädern auf der linken Fahrzeugseite gespürt werden, weil nur die Räder auf der rechten Fahrzeugseite oder die Räder auf der linken Fahrzeugseite über die Unebenheiten hinweg fahren. Die Radelektroniken haben deshalb erfindungsgemäß einen Sensor, der auf Stöße anspricht, die am jeweiligen Rad auftreten. Als Sensor, der auf Stöße anspricht, eignet sich besonders ein Beschleunigungssensor, insbesondere ein Beschleunigungssensor, der auf radiale Beschleunigungen des Rades anspricht. Wenn z. B. ein linkes Vorderrad eines Fahrzeuges durch Überfahren einer Unebenheit der Fahrbahn einen Stoß erhält, der vom Stoßsensor in der Radelektronik des linken Vorderrades erfasst und gemeldet wird, dann wird höchstwahrscheinlich das linke Hinterrad des Fahrzeuges kurz darauf ebenfalls über dieselbe Unebenheit der Fahrbahn hinwegrollen und einen Stoß erhalten, den der Stoßsensor der am hinteren linken Rad vorgesehenen Radelektronik erfasst und meldet. Die Zeitspanne zwischen dem Auftreten der Stöße am vorderen und am hinteren Rad ist durch den Achsabstand zwischen dem vorderen Rad und dem hinteren Rad und durch die momentane Geschwindigkeit des Fahrzeuges bestimmt: Die Zeitspanne ergibt sich aus dem Achsabstand, indem dieser durch die momentane Geschwindigkeit des Fahrzeugs dividiert wird. Misst man die momentane Geschwindigkeit und die Zeitspanne zwischen dem Auftreten eines Stoßsignals, welches von der Radelektronik des vorderen Rades gemeldet wird, und dem Auftreten eines Stoßsignales, welches von der Radelektronik des hinteren Rades gemeldet wird und ergibt das Produkt aus dieser Zeitspanne und aus der momentanen Geschwindigkeit des Fahrzeuges gerade den gegebenen Achsabstand des Fahrzeugs, dann wird erfindungsgemäß daraus geschlossen, dass die beiden auf derselben Fahrzeugseite hintereinander angeordneten Räder über dieselbe Unebenheit der Fahrbahn hinweggerollt sind. Daraus folgt, dass die erste der beiden aufeinanderfolgend übermittelten Kennungen, die bekanntermaßen von Rädern auf ein-und-derselben Fahrzeugseite stammen, einer vorderen Achse zuzuordnen ist, während die am Ende der Zeitspanne empfangene zweite Kennung, welche von einem Rad auf derselben Fahrzeugseite stammt, der im bekannten Achsabstand dahinter angeordneten Achse zuzuordnen ist. Damit sind die Radpositionen, die zu den beiden empfangenen und ausgewerteten Kennungen gehören, eindeutig bestimmt, denn die Zuordnung zu einer bestimmten Seite des Fahrzeugs war schon bestimmt.

Auf entsprechende Weise können den Radpositionen auf der anderen Fahrzeugseite die Kennungen der auf dieser anderen Seite verbauten Radelektroniken eindeutig zugeordnet werden.

Mit Vorteil können auch Stöße ausgewertet werden, welche gleichzeitig an zwei Rädern mit unterschiedlicher Drehrichtung auf einer gemeinsamen Achse auftreten und z. B. von Dehnungsfugen oder über die gesamte Fahrbahnbreite sich erstreckenden Änderungen des Fahrbahnbelages bewirkt werden und eine schnellere Zuordnung der Kennungen zu den einzelnen Radpositionen erlauben.

Für das Erkennen der Stöße muss nicht unbedingt ein Beschleunigungssensor in der Radelektronik verwendet werden. Da am Rad auftretende Stöße auch zu Druckstößen in der vom Reifen eingeschlossenen Luft führen, können die Stöße auch von dem in der Radelektronik vorhandenen Drucksensor erfasst werden. Die Stoßerkennung mittels eines Beschleunigungssensors ist jedoch bevorzugt und verbraucht weniger Energie.

Das Zuordnungsverfahren eignet sich auch für Fahrzeuge mit mehr als zwei Achsen, denn auch in diesem Fall haben je zwei Achsen einen bekannten Achsabstand, mit dessen Hilfe aus der Fahrzeuggeschwindigkeit und aus der Zeitspanne zwischen zwei auf derselben Fahrzeugseite aufgetretenen Stoßsignalen die Zuordnung der Kennungen zu den Radpositionen wie bei einem zweiachsigen Fahrzeug eindeutig erfolgen kann.

Soweit auf einer Achse des Fahrzeuges zwei Paare von Zwillingsrädern angeordnet sind, kann die Zuordnung der Kennungen zu den Radpositionen ebenfalls nach dem erfindungsgemäßen Verfahren erfolgen, denn für die Unterscheidung von Rädern auf der rechten Seite und Rädern auf der linken Seite des Fahrzeuges gilt in diesem Fall nichts anderes. Für das Auswerten der von den Stoßsensoren gelieferten Stoßsignale kann man davon ausgehen, dass Stoßsignale, die von einer an einem vorderen Rad angebrachten Radelektronik stammen, bei den beiden auf derselben Seite des Fahrzeugs im Achsabstand dahinter angeordneten Zwillingsrädern mit unterschiedlicher Häufigkeit zu Stoßsignalen führen. Von den beiden Zwillingsrädern wird jenes Rad, welches in der Spur des vorderen Rades angeordnet ist - und das ist im Normalfall das äußere der beiden Räder - von derselben Unebenheit der Fahrbahn, welche dem vorderen Rad einen Stoß versetzt hat, mit größerer Wahrscheinlichkeit einen Stoß erhalten als das weiter innen angeordnete zweite Rad des Zwillings. Auf dieser Grundlage kann aus der Häufigkeit des Auftretens der Stoßsignale zwischen den beiden Zwillingsrädern unterschieden werden, die auf derselben Fahrzeugseite angeordnet sind.

Bei der Prüfung, ob die Länge, die durch Multiplikation der Fahrzeuggeschwindigkeit mit der Zeitspanne zwischen Stoßsignalen, die aufeinanderfolgend von Radelektroniken auf der linken Fahrzeugseite bzw. von Radelektroniken auf der rechten Fahrzeugseite gemeldet wurden, erhalten wird, mit einem gegebenen Achsabstand des Fahrzeuges übereinstimmt, wird zweckmäßigerweise nicht geprüft, ob die ermittelte Länge mit dem gegebenen Achsabstand genau übereinstimmt. Stattdessen genügt es zu überprüfen, ob die ermittelte Länge innerhalb einer vorgegebenen Toleranz mit einem gegebenen Achsabstand des Fahrzeuges übereinstimmt. Welche Abweichung der ermittelten Länge von dem gegebenen Achsabstand tolerierbar ist, kann durch Versuche ermittelt werden. Wird die Toleranz zu klein gewählt, werden in vielen Fällen die aus Stoßsignalen, die auf einer gemeinsamen Fahrzeugseite an hintereinander angeordneten Rädern gewonnen werden, ermittelten Längen nicht mit dem eng tolerierten Achsabstand übereinstimmen, so dass das Zuordnungsverfahren unnötig lange dauern wird. Wird die Toleranz zu groß gewählt, dann kann es zu einer fehlerhaften Zuordnung kommen, wenn Stoßsignale, die tatsächlich nicht miteinander korreliert sind, die Zuordnung bestimmen.

Eine hinreichende Zuverlässigkeit des erfindungsgemäßen Zuordnungsverfahrens erzielt man, indem die Zuordnungen wiederholt gebildet und statistisch ausgewertet werden. Zu diesem Zweck können jene Zuordnungen, die am häufigsten auftreten, ausgewählt und in einem Speicher, welcher in der Auswerteeinrichtung oder in Verbindung mit der Auswerteeinrichtung vorgesehen ist, gespeichert werden. Je mehr Stoßsignale ausgewertet werden, desto deutlicher wird sich eine Tendenz zu Gunsten der richtigen Zuordnungen gegenüber den fehlerhaften Zuordnungen ausbilden.

Mathematisch kann man die statistische Auswertung so durchführen, dass in der Auswerteeinrichtung eine Matrix gebildet wird, in welcher für jedes mögliche Paar aus einer Radposition und einer Kennung ein Feld vorgesehen ist, auf welchem eine für das jeweilige Paar ermittelte Zuordnung als Treffer mit dem Wert "1" eingetragen und mit jedem weiteren Treffer um "1" erhöht wird. Sobald sich sowohl bei der Auswertung von Stoßsignalen als auch bei der Auswertung der Intensitäten der von der Auswerteeinrichtung empfangenen Signale eine Tendenz zu einer übereinstimmenden Zuordnung einer Kennung zu einer bestimmten Radposition ausgebildet hat, kann diese Zuordnung als zutreffend gespeichert werden und das Zuordnungsverfahren für eben diese Kennung beendet werden. Sind auf diese Weise alle Kennungen jeweils einer der vorhandenen Radpositionen zugeordnet, dann wird das Zuordnungsverfahren insgesamt beendet. Signale, die danach während der Reifendrucküberwachung von den Radelektroniken ausgesandt werden, werden derjenigen Radposition zugeordnet, welche unter der im Signal enthaltenen Kennung gespeichert ist. Diese Zuordnung bleibt erhalten, bis sie durch eine geänderte Zuordnung ersetzt wird. Es ist zweckmäßig, jedes Mal dann, wenn das Fahrzeug neu gestartet wird, das erfindungsgemäße Zuordnungsverfahren erneut durchzuführen. Zweckmäßigerweise erst dann, wenn das erneute Zuordnungsverfahren zu einer abweichenden Zuordnung geführt hat, werden die abweichenden Zuordnungen anstelle der bisher gespeicherten Zuordnungen abgespeichert.

Das erfindungsgemäße Verfahren hat wesentliche Vorteile:
- Das Verfahren erlaubt eine automatische und zuverlässige Zuordnung der Radelektroniken zu den jeweiligen Radpositionen schneller und mit weniger Sendevorgängen der Radelektroniken als bisher im Stand der Technik.
- Das Verfahren lässt sich ohne besonderen technischen Aufwand durchführen. Radelektroniken sind schon heute meistens mit Beschleunigungssensoren ausgestattet, die auf eine Tangentialbeschleunigung und/oder auf eine Radialbeschleunigung des Rades ansprechen. Es kann sich dabei um getrennte Sensoren handeln, aber auch um einen sogenannten mehrachsigen Beschleunigungssensor, der sowohl Tangentialbeschleunigungen als auch Radialbeschleunigungen feststellen kann.
- Die für die Auswertung der Stoßsignale erforderliche Information über die Fahrzeuggeschwindigkeit ist in einem Straßenfahrzeug stets verfügbar. Heutige Tachometer liefern ein elektrisches Geschwindigkeitssignal, welches z. B. über ein BUS-System der erfindungsgemäß vorgesehenen Auswerteeinrichtung zugeführt werden kann.
- Die auftretenden Stoßsignale sind verhältnismäßig langsame Signale. Sie können nach ihrem Empfang ohne weiteres über ein preiswertes, auf langsame Signale ausgelegtes BUS-System übertragen werden, welches in heutigen Fahrzeugen weitgehend üblich ist.
- Das erfindungsgemäße Verfahren erfordert keine besondere Position der Antenne, mit welcher die von den Radelektroniken ausgesandten Signale empfangen werden. Es kann deshalb eine Antenne verwendet werden, die gleichzeitig für ein anderes Funksystem benutzt wird, z. B. eine am Unterboden des Fahrzeugs angeordnete Antenne, die von einem Funkschlüssel des Fahrzeugs ausgesandte Funksignale empfangen kann.
- Ein aufwendiger Abgleich der für das Zuordnungsverfahren benutzten Signale mit den Signalen eines ABS-Systems, welcher bei dem in der EP 0 806 306 B1 vorgeschlagenen Zuordnungsverfahren nötig ist, wird erfindungsgemäß nicht benötigt.
- Für das erfindungsgemäße Verfahren wird kein gesondertes Auswertegerät benötigt, vielmehr kann die Auswertung in einem im Fahrzeug ohnehin vorhandenen Bordcomputer oder Steuergerät durchgeführt werden, welches eine Recheneinheit, z. B. einen Mikroprozessor, aufweist.

Die Prüfung, ob die Länge, welche sich durch Multiplikation der Geschwindigkeit des Fahrzeuges mit der Zeitspanne zwischen Stößen ergibt, die aufeinanderfolgend von Radelektroniken auf ein und derselben Fahrzeugseite gemeldet wurden, innerhalb einer vorgegebenen Toleranz mit einem gegebenen Achsabstand der Fahrzeuges übereinstimmt, kann z. B. so erfolgen: Jedes Mal dann, wenn die Auswerteeinrichtung ein Stoßsignal erfasst, wird von der Auswerteeinrichtung ein Zeitfenster geöffnet, dessen Beginn und Ende unter Berücksichtigung der gemessenen Fahrzeuggeschwindigkeit so festgelegt werden, dass die Kennung in einem nachfolgenden Signal, welches in dem geöffneten Zeitfenster auftritt, einem Rad bzw. einer Radposition zugeordnet wird, welche in dem gegebenen Achsabstand von einem weiter vorn angeordneten Rad vorzugsweise auf derselben Fahrzeugseite angeordnet ist. Der Position des weiter vorn angeordneten Rades, von welchem das vorherige Stoßsignal kam, wird die in diesem vorherigen Stoßsignal enthaltene Kennung zugeordnet. Die Breite des Zeitfensters entspricht in dieser Ausgestaltung des Zuordnungsverfahrens der Toleranz, innerhalb welcher die durch Multiplikation der Zeitspanne, die die Breite des Zeitfensters angibt, mit der Geschwindigkeit des Fahrzeuges gebildete Länge mit dem gegebenen Achsabstand des Fahrzeuges übereinstimmen würde.

Der Auswerteeinrichtung wird während der Fahrt das Ausgangssignal eines elektrischen oder elektronischen Tachometers zweckmäßigerweise ständig zugeführt. Vorzugsweise wird der Auswerteeinrichtung unmittelbar ein digitales Ausgangssignal des Tachometers zugeführt. Die Auswerteeinrichtung kann jederzeit nach Bedarf auf das Ausgangssignal des Tachometers zugreifen. Die momentane Geschwindigkeit des Fahrzeugs muss aber nicht unbedingt vom Tachometer des Fahrzeugs geliefert werden. Sie kann z.B. auch aus der Raddrehzahl abgeleitet werden, welche entweder von einem ABS-Sensor an einem der Räder oder von einem Beschleunigungssensor in einer Radelektronik geliefert wird. Auch ein GPS-Empfänger kann zur Bestimmung der Fahrzeuggeschwindigkeit herangezogen werden.

Vorzugsweise wird das Verfahren so durchgeführt, dass in der Radelektronik geprüft wird, ob die Amplitude eines Stoßsignals, welches vom Stoßsensor als Antwort auf einen Stoß gebildet wird, einen gegebenen Schwellenwert übersteigt. Wenn - wie bevorzugt - als Stoßsensor ein Beschleunigungssensor verwendet wird, wird geprüft, ob die gemessene Beschleunigung einen gegebenen Schwellenwert übersteigt. Nur wenn die Amplitude des Stoßsignals, im Falle eines Beschleunigungssensors die Amplitude eines Beschleunigungssignals, den gegebenen Schwellenwert übersteigt und das Zuordnungsverfahren noch nicht beendet ist, wird der Sender in der Radelektronik zum sofortigen Aussenden eines Signals veranlasst, welches die erforderliche Information über den Stoß, die Kennung und vorzugsweise auch über die Drehrichtung des Rades enthält. Auf diese Weise kann die Empfindlichkeit des Stoßsensors automatisch den Fahrbahngegebenheiten angepasst werden, indem die Schwelle bei einer holperigen Fahrbahn höher als bei einer glatten Fahrbahn gesetzt wird. Das hat den Vorteil, dass unnötige Sendevorgänge, die auf Kosten der Lebensdauer einer in der Radelektronik vorgesehenen Batterie gehen, vermieden werden und dass das Zuordnungsverfahren besonders zuverlässig abläuft, weil es sich in erster Linie auf die Auswertung von deutlich auftretenden Stößen konzentriert, die paarweise korreliert sind. Die Entscheidung, wann Signale ausgesendet werden, die einen anomalen Reifendruck signalisieren, soll unabhängig von der Entscheidung fallen, welche der in der Radelektronik erfassten Stoßsignale übertragen werden sollen und welche nicht. Die Entscheidung, wann und wie anomale Drücke signalisiert werden, wird, wie an sich bekannt, nach anderen Kriterien gefällt, z. B. das Unterschreiten oder Überschreiten vorgegebener Druckschwellen und das Überschreiten vorgegebener Grenzwerte der Geschwindigkeit, mit welcher sich ein Druck ändert.

Der Schwellenwert der Stärke eines Stoßsignals, bei dessen Überschreiten in der Radelektronik ein Sendevorgang ausgelöst werden soll, muss nicht starr vorgegeben werden, sondern ist vorzugsweise veränderlich. Werden längere Zeit keine Stoßsignale übertragen, kann das als Hinweis gewertet werden, dass der Schwellenwert zu hoch gewählt war. Werden Stoßsignale jedoch zu häufig gesendet und lassen sie sich zu häufig nicht mit einem im Fahrzeug gegebenen Achsabstand korrelieren, z. B. weil die Stoßsignale verrauscht sind, so ist das ein Zeichen dafür, dass der Schwellenwert zu niedrig gewählt war. In beiden Fällen gibt das Anlass, den Schwellenwert anzupassen.

Bei Verwendung eines auf radiale Beschleunigungen ansprechenden Sensors als Stoßsensor wird als Schwellenwert vorzugsweise ein Wert in dem Bereich von 2g bis 4g (g steht für die Erdbeschleunigung) verwendet. Dadurch lässt sich sicherstellen, dass schwache Stöße, die zu verrauschten Signalen führen würden, unberücksichtigt bleiben und dass hinreichend viele Stoßsignale übertragen werden, die sich gut auswerten lassen. Wenn in Zeiträumen von einigen Minuten keine gut verwertbaren Stoßsignale auftreten, gibt das Anlass, den eingestellten Schwellenwert zu verändern. Das kann autonom in den Radelektroniken erfolgen; wenn die Radelektroniken von der Auswerteeinrichtung veranlasste Steuersignale empfangen können, welche eine andere Trägerfrequenz, z. B. 120 kHz, haben als die von den Radelektroniken ausgesandten Signale, dann kann der Schwellenwert auch mit Hilfe von Steuersignalen geändert werden, die von der Auswerteeinrichtung veranlasst werden.

Wenn auch bei niedrig eingestellter Schwelle längere Zeit, z. B. für einige Minuten, keine Stoßsignale übertragen werden, kann das ein Anzeichen dafür sein, dass die Fahrbahn zu glatt ist, um auswertbare Stöße zu liefern. In dem Fall ist es vorteilhaft, den Stoßsensor für einige Zeit abzuschalten, um Strom zu sparen, bis sich das Fahrzeug wieder auf einer Fahrbahn mit größeren Unebenheiten bewegt. Das Abschalten kann für bestimmte Zeitabschnitte erfolgen, z. B. für jeweils eine Minute, um danach erneut zu prüfen, ob verwertbare Stoßsignale erhalten werden können.

Ein Ausführungsbeispiel der Erfindung wird anhand des beigefügten Ablaufdiagramms für ein Fahrzeug mit vier Rädern und zwei Achsen beschrieben:
In einem ersten Schritt 1 wird das erfindungsgemäße Verfahren gestartet, z. B. immer dann wenn das Fahrzeug während einer vorgegebenen Zeitspanne nicht bewegt wurde und danach eine Geschwindigkeit von z. B. 20 km/h überschritten wurde, was der Tachometer des Fahrzeugs der Auswerteeinrichtung melden kann.

In einem zweiten Schritt 2 wird in der Auswerteeinrichtung eine Stoppuhr gestartet (t=0), welche das Zuordnungsverfahren spätestens nach einer vorgegebenen Zeitspanne T beenden soll.

Die Tatsache, dass das Fahrzeug bewegt wird und eine Geschwindigkeit von 20 km/h überschreitet, erfassen auch die Beschleunigungssensoren in den Radelektroniken und veranlassen diese, das Vorzeichen der Beschleunigung und damit die Drehrichtung des jeweiligen Rades per Funk an den Empfänger der Auswerteeinrichtung zu übertragen, welche daraus in einem dritten Schritt 3 ableitet, welche Kennungen zu Radelektroniken an Rädern auf der linken Seite des Fahrzeuges gehören und welche Kennungen zu Radelektroniken an Rädern auf der rechten Seite des Fahrzeuges gehören.

In einem vierten Schritt 4 wird abgefragt, ob jedes der vier Räder einer Seite des Fahrzeuges, entweder links oder rechts, zugeordnet ist. Wenn das noch nicht der Fall ist, springt das Verfahren zum dritten Schritt 3 zurück. Sobald jedes Rad einer der beiden Fahrzeugseiten zugeordnet ist, verzweigt sich das Zuordnungsverfahren in zwei Zweige A und B. Im Zweig A werden in einem Schritt 5A in einer vorgegebenen Zeitspanne Δt < T die Intensitäten der von den verschiedenen Radelektroniken gesendeten Signale (Funktelegramme) erfasst und jeweils unter der in den Signalen mitübertragenen Kennung addiert. Im Zweig 5B werden zeitlich parallel dazu in der vorgegebenen Zeitspanne Δt die mit den von den Radelektroniken kommenden Signalen (Funktelegramme) gemeldeten Stoßereignisse in der Auswerteeinrichtung erfasst und unter der in den Signalen mitübertragenen Kennung gezählt.

Nach Ablauf der vorgegebenen Zeitspanne Δt wird in einem Schritt 6A für Signale, die von Radelektroniken an Rädern auf der linken Fahrzeugseite gekommen sind und gesondert für die Signale, die von Radelektroniken an Rädern auf der rechten Fahrzeugseite gekommen sind jeweils die Differenz der Intensitäten gebildet, unter den beiden der rechten Fahrzeugseite zugeordneten Kennungen und unter den beiden der linken Fahrzeugseite zugeordneten Kennungen addiert und gespeichert wurden. Ist für die Radelektroniken, die auf der linken Fahrzeugseite montiert sind, die Differenz groß genug, um daraufhin sicher unterscheiden zu können, welcher der beiden Radelektroniken am Rad vorne links montiert ist und welcher am Rad hinten links montiert ist, dann wird im Schritt 9 für die Radelektroniken, die an Rädern der linken Fahrzeugseite montiert sind, die so ermittelte Zuordnung gespeichert und das Zuordnungsverfahren insoweit beendet.

Für die Radelektroniken, die an den Rädern auf der rechten Seite des Fahrzeuges montiert sind, wird entsprechend verfahren.

Im Zweig B des Verfahrens wird entsprechend wie im Zweig A vorgegangen. Die Verfahren in den Zweigen A und B laufen zeitlich nebeneinander ab. Wenn z. B. für die beiden Räder auf der linken Fahrzeugseite die Anzahl der erfassten Stoßereignisse, die im passenden, von der Geschwindigkeit abhängenden Zeitabstand mit unterschiedlicher Kennung empfangen wurden, groß genug ist, um daraus mit Sicherheit schließen zu können, welche Kennung dem linken Vorderrad zuzuordnen ist und welche dem linken Hinterrad zuzuordnen ist, dann wird diese Zuordnung gespeichert, wodurch die beiden Kennungen, die zu Rädern auf der linken Fahrzeugseite gehören, richtig zugeordnet sind und das Verfahren für die linken Räder beendet ist.

Für Kennungen, die an Rädern auf der rechten Fahrzeugseite montiert sind, wird entsprechend verfahren.

Wenn jedoch weder bei der Überprüfung im Schritt 6A noch bei der Überprüfung im Schritt 6B eine eindeutige Zuordnung möglich ist, dann wird in einem Schritt 7 überprüft, ob die nach der Zeitspanne Δt in den Schritten 6A und 6B erreichten Auswertungen der Intensität und der Stoßereignisse wenigstens eine übereinstimmende Tendenz zu Gunsten einer bestimmten Zuordnung erkennen lassen. Ist das der Fall, wird das Verfahren mit der Speicherung der sich aus der übereinstimmenden Tendenz ergebenden Zuordnung im Schritt 8 mit der Speicherung der Zuordnung beendet.

Wenn sich jedoch im Schritt 7 noch keine deutliche Tendenz zu Gunsten einer übereinstimmenden Zuordnung abzeichnet, springt das Verfahren zurück zu den Schritten 5A und 5B und durchläuft die Zweige A und B ein weiteres Mal. Das wiederholt sich so oft, bis sich für die Radelektroniken auf der rechten wie auf der linken Fahrzeugseite im Schritt 7 eine deutliche Tendenz zu Gunsten einer bestimmten Zuordnung zu den Kennungen herausgebildet hat. Wenn das über eine größere Zeitspanne T nicht zum Erfolg führt, z. B. weil keine Stoßereignisse registriert werden, kann das Verfahren nach Überschreiten der vorgegebenen Zeitspanne T im Schritt 10 vorläufig abgebrochen werden zu einem späteren Zeitpunkt neu gestartet werden. Das Überschreiten der Zeitspanne T wird im Schritt 9 festgestellt.

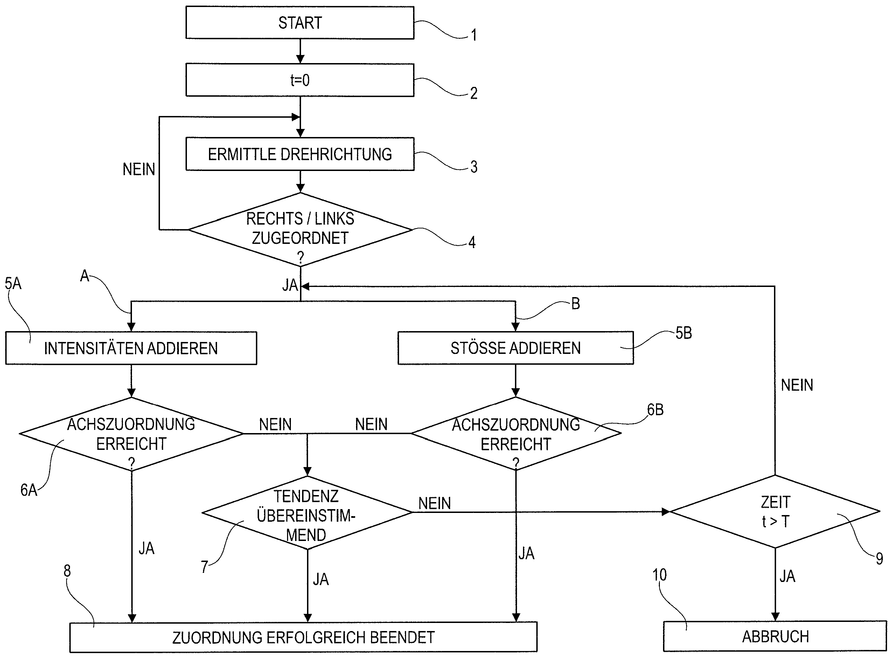

## Patentansprüche

1. Verfahren zum Zuordnen von Kennungen,
die in Signalen enthalten sind, welche von - nachfolgend als Radelektroniken bezeichneten - Baugruppen eines Reifendrucküberwachungssystems eines wenigstens zwei Achsen aufweisenden Fahrzeuges ausgesandt werden, die an Rädern des Fahrzeuges angebracht sind, auf welchen das Fahrzeug fährt,
zu den Positionen der Räder am Fahrzeug,
wobei die Radelektroniken jeweils mehrere Sensoren, von denen einer auf den Reifendruck des Rades und ein anderer auf die Stöße anspricht, die am Rad auftreten,
einen Speicher mit der darin gespeicherten individuellen Kennung der jeweiligen Radelektronik,
und einen Sender aufweisen, welcher Signale, die nicht nur die individuelle Kennung der betreffenden Radelektronik, sondern auch die Information über das Auftreten eines Stoßes an demselben Rad enthalten, an einen Empfänger überträgt, der mit einer Antenne sowie mit einer Auswerteeinrichtung versehen oder verbunden ist, welcher außerdem ein Geschwindigkeitssignal zugeführt wird, welches die Fahrgeschwindigkeit angibt;
das Verfahren weist folgende Schritte auf, die für die Räder auf der rechten Seite des Fahrzeugs gesondert von den Rädern auf der linken Seite des Fahrzeugs durchgeführt werden:
die Auswerteeinrichtung
(a) erfasst die in den Signalen enthaltenen Kennungen,
(b) misst die Zeitspanne zwischen Stoßsignalen, die aufeinanderfolgend empfangen werden,
(c) multipliziert die gemessene Zeitspanne mit einer in derselben Zeitspanne gemessenen und der Auswerteeinrichtung gemeldeten Geschwindigkeit des Fahrzeugs,
(d) vergleicht die durch diese Multiplikation gebildete Länge mit einem gegebenen Abstand zweier Achsen des Fahrzeuges;
(e) wenn die Länge innerhalb einer vorgegebenen Toleranz mit dem gegebenen Achsabstand übereinstimmt, ordnet die Auswerteeinrichtung die Kennung, die in dem Signal enthalten war, welches die Information über den ersten von zwei aufeinanderfolgend erfassten Stößen enthielt, der in Fahrtrichtung gesehen vorderen Achse zu und ordnet die Kennung, die in dem Signal enthalten war, welches die Information über den zweiten der beiden aufeinanderfolgend erfassten Stöße enthielt, der in Fahrtrichtung gesehen hinteren Achse zu und zählt für jede Kennung die Zuordnungen zur vorderen Achse getrennt von den Zuordnungen zur hinteren Achse, gleichzeitig oder zeitlich überlappend mit den Schritten (a) bis (e);
(f) misst die Auswerteeinrichtung die Intensität der von ihr empfangenen Signale;
(g) vergleicht die Intensitäten von Signalen, welche aufeinander folgend empfangen werden und sich hinsichtlich ihrer Kennung unterscheiden;
(h) ordnet die Kennung jenes Signals, welches als Ergebnis des Vergleichs die höhere Intensität aufweist, jener Achse zu, auf welcher sich das Rad mit jener Radelektronik befindet, für deren Signal aufgrund der gegebenen Anordnung der Antenne des Empfängers und bei gleicher Sendeleistung der Radelektroniken die Wahrscheinlichkeit größer ist, dass von einer auf ihr angeordneten Radelektronik das mit der größeren Intensität empfangene Signal stammt als von einer auf der anderen Achse angeordneten Radelektronik;
(i) zählt für jede Kennung die aus dem Vergleich der Intensitäten abgeleiteten Zuordnungen zur vorderen Achse getrennt von den Zuordnungen zur hinteren Achse;
(k) vergleicht für jede Kennung die Häufigkeit der Zuordnung zu einer bestimmten Achse und zwar sowohl für die im Schritt (e) als auch für die im Schritt (i) ermittelten Zuordnungen;
(l) wenn sich in beiden Schritten (e) und (i) eine Tendenz zu Gunsten einer der Zuordnungen herausgebildet hat, wird diese Zuordnung einer Kennung zu einer bestimmten Achse gespeichert und für die anderen Kennungen wird das Verfahren weiter geführt.

2. Verfahren nach Anspruch 1, **gekennzeichnet durch** die folgenden weiteren Schritte:
(m) ein in den Radelektroniken vorgesehener Sensor liefert eine Information über die Drehrichtung des jeweiligen Rades, welche in dem Signal, das die individuelle Kennung der betreffenden Radelektronik enthält, an den Empfänger übertragen wird;
(n) die Auswerteeinrichtung erfasst die Drehrichtungsinformationen, unterscheidet auf der Grundlage der erfassten Drehrichtungsinformationen zwischen Kennungen, die zu Radelektroniken an Rädern auf der linken Fahrzeugseite gehören, und Kennungen, die zu Radelektroniken an Rädern auf der rechten Fahrzeugseite gehören, und unterscheidet auf dieser Grundlage Stöße, die ihr von Radelektroniken auf der linken Fahrzeugseite gemeldet werden, von Stößen, die ihr von von Radelektroniken auf der rechten Fahrzeugseite gemeldet werden.

3. Verfahren nach Anspruch 2, **dadurch gekennzeichnet, dass** jedes Mal dann, wenn die Auswerteeinrichtung ein Stoßsignal erfasst, von der Auswerteeinrichtung ein Zeitfenster geöffnet wird, dessen Beginn und Ende unter Berücksichtigung der gemessenen Fahrzeuggeschwindigkeit so gebildet werden, dass die Kennung in einem nachfolgenden Stoßsignal, welches von einem Rad auf derselben Fahrzeugseite stammt und in dem geöffneten Zeitfenster auftritt, einem Rad zugeordnet wird, welches auf derselben Fahrzeugseite in dem gegebenen Achsabstand von einem auf derselben Fahrzeugseite weiter vorn angeordneten Rad angeordnet ist, welchem die in dem vorher von einer auf derselben Fahrzeugseite angeordneten Radelektronik gekommenen Stoßsignal enthaltene Kennung zugeordnet wird.

4. Verfahren nach einem der vorstehenden Ansprüche, **dadurch gekennzeichnet, dass** dann, wenn die Auswerteeinrichtung gleichzeitig zwei Stoßsignale erfasst, welche anzeigen, dass sie von zwei Rädern mit unterschiedlicher Drehrichtung stammen, die mit den beiden Stoßsignalen übertragenen Kennungen zwei Rädern auf einer gemeinsamen Achse zugeordnet werden.

5. Verfahren nach einem der vorstehenden Ansprüche, **dadurch gekennzeichnet, dass** der Auswerteeinrichtung während der Fahrt ständig ein digitales Ausgangssignal eines elektrischen oder elektronischen Tachometers des Fahrzeugs zugeführt wird.

6. Verfahren nach einem der vorstehenden Ansprüche, **dadurch gekennzeichnet, dass** die Zuordnungen wiederholt gebildet und statistisch ausgewertet werden, indem Zuordnungen, die auffallend häufig auftreten, ausgewählt und in einem Speicher, welcher im Auswertegerät oder in Verbindung mit dem Auswertegerät vorgesehen ist, gespeichert werden, und dass das Zuordnungsverfahren beendet wird, wenn für alle empfangenen Kennungen eine Zuordnung gespeichert ist.

7. Verfahren nach Anspruch 6, **dadurch gekennzeichnet, dass** die Zuordnungen so lange gespeichert werden, bis sie durch ein bei erneutem Fahrzeugstart gestartetem weiteren Zuordnungsverfahren geändert werden.

8. Verfahren nach einem der vorstehenden Ansprüche, **dadurch gekennzeichnet, dass** zur Bestimmung der Drehrichtung des Rades ein Beschleunigungssensor verwendet wird, insbesondere ein Beschleunigungssensor, der auf Tangentialbeschleunigungen des Rades anspricht.

9. Verfahren nach einem der vorstehenden Ansprüche, **dadurch gekennzeichnet, dass** als Sensor, der auf Stöße anspricht, ein Beschleunigungssensor verwendet wird, insbesondere ein Beschleunigungssensor, der auf radiale Beschleunigungen des Rades anspricht.

10. Verfahren nach einem der vorstehenden Ansprüche, **dadurch gekennzeichnet, dass** in der Radelektronik überprüft wird, ob die Stärke eines vom Stoßsensor gelieferten Stoßsignals einen gegebenen Schwellenwert übersteigt und dass nur dann, wenn das der Fall ist, der Sender der Radelektronik zum sofortigen Aussenden eines Signals veranlasst wird, sofern das Zuordnungsverfahren nicht beendet ist.

11. Verfahren nach Anspruch 10, **dadurch gekennzeichnet, dass** der Schwellenwert herabgesetzt wird, wenn für eine längere Zeit keine Stoßsignale übertragen, und dass der Schwellenwert heraufgesetzt wird, wenn die übertragenen Stoßsignale häufig nicht mit einem im Fahrzeug vorliegenden Achsabstand korreliert sind.

12. Verfahren nach Anspruch 11, **dadurch gekennzeichnet, dass** dann, wenn auch bei herabgesetztem Schwellenwert einige Minuten lang von einer Radelektronik keine Stoßsignale übertragen werden, die Stoßsensoren für eine bestimmte Dauer abgeschaltet werden.

13. Verfahren nach einem der vorstehenden Ansprüche, **dadurch gekennzeichnet, dass** an Stoßdämpfern oder Radaufhängungen oder Federn des Fahrzeugs weitere Stoßsensoren angeordnet sind und nur solche Stoßsignale ausgewertet werden, welche gleichzeitig von einem der weiteren Stoßsensoren vorzugsweise leitungsgebunden und von einer Radelektronik drahtlos übertragen werden.

## Claims

1. A method for assigning identifiers,
which are contained in signals which are emitted by units - called wheel electronics in the following - of a tyre pressure monitoring system of a vehicle having at least two axles, which wheel electronics are mounted on wheels of the vehicle, on which the vehicle travels,
to the positions of the wheels on the vehicle,
wherein the wheel electronics each have a plurality of sensors, one of which responds to the tyre pressure of the wheel and another responds to the impacts which occur on the wheel,
a memory, in which the individual identifier of the respective wheel electronics is stored,
and a transmitter, which transmits signals which contain not only the individual identifier of the respective wheel electronics but also information relating to the occurrence of an impact on the same wheel, to a receiver which is provided or connected with an antenna and with an evaluation unit, to which in addition a speed signal is delivered, which indicates the speed of travel;
the method comprises the following steps, which are carried out for the wheels on the right side of the vehicle separately from the wheels on the left side of the vehicle:
the evaluation unit
(a) detects the identifiers contained in the signals,
(b) measures the time span between impact signals, which are received consecutively,
(c) multiples the measured time span with a speed of the vehicle, measured in the same time span and reported to the evaluation unit,
(d) compares the length received by this multiplication with a given distance of two axles of the vehicle;
(e) if the length within a predetermined tolerance coincides with the given axle distance, the evaluation unit assigns the identifier which was contained in the signal, which contains the information relating to the first of two consecutively detected impacts, to the front axle viewed in the direction of travel, and assigns the identifier which was contained in the signal, which contains the information relating to the second of the two consecutively detected impacts, to the rear axle viewed in the direction of travel, and counts for each identifier the assignments to the front axle separately from the assignments to the rear axle, simultaneously or chronologically overlapping with the steps (a) to (e);
(f) the evaluation unit measures the intensity of the signals received by it;
(g) compares the intensities of signals which are received consecutively and differ from one other with regard to their identifier;
(h) assigns the identifier of the signal which has the higher intensity, as a result of the comparison, to the axle on which the wheel with that wheel electronics is situated, for the signal of which, owing to the given arrangement of the antenna of the receiver and with the same transmission power of the wheel electronics the likelihood is greater that the received signal with the greater intensity originates from a wheel electronics arranged on it than from a wheel electronics arranged on the other axle;
(i) counts for each identifier the assignments to the front axle, derived from the comparison of the intensities, separately from the assignments to the rear axle;
(k) compares for each identifier the frequency of occurrence of the assignment to a particular axle and namely both for the assignments determined in step (e) and also for the assignments determined in step (i);
(l) when in both steps (e) and (i) a trend has formed in favour of one of the assignments, this assignment of an identifier to a particular axle is stored and the method is continued for the other identifiers.

2. The method according to Claim 1, **characterized by** the following further steps:
(m) a sensor provided in the wheel electronics delivers information relating to the rotation direction of the respective wheel, which is transmitted to the receiver in the signal which contains the individual identifier of the respective wheel electronics;
(n) the evaluation unit detects the rotation direction information, differentiates on the basis of the detected rotation direction information between identifiers which belong to wheel electronics on wheels on the left vehicle side and identifiers which belong to wheel electronics on wheels on the right vehicle side, and differentiates on this basis impacts which are reported to it from wheel electronics on the left vehicle side from impacts which are reported to it from wheel electronics on the right vehicle side.

3. The method according to Claim 2, **characterized in that** each time the evaluation unit detects an impact signal, a time window is opened by the evaluation unit, the start and end of which are formed taking into consideration the measured vehicle speed, so that the identifier in a subsequent impact signal, which originates from a wheel on the same vehicle side and occurs in the open time window, is assigned to a wheel which is arranged on the same vehicle side in the given axle distance from a wheel arranged further forward on the same vehicle side, to which the identifier, contained in the impact signal which came previously from a wheel electronics arranged on the same vehicle side, is assigned.

4. The method according to any one of the preceding claims, **characterized in that** when the evaluation unit detects two impact signals simultaneously, which indicate that they originate from two wheels with different rotation direction, the identifiers transmitted with the two impact signals are assigned to two wheels on a shared axle.

5. The method according to any one of the preceding claims, **characterized in that** a digital output signal of an electric or electronic tachometer of the vehicle is delivered constantly to the evaluation unit during travel.

6. The method according to any one of the preceding claims, **characterized in that** the assignments are repeatedly formed and statistically evaluated, by assignments which noticeably occur frequently being selected and stored in a memory which is provided in the evaluation unit or in connection with the evaluation unit, and that the assignment method is terminated when an assignment is stored for all received identifiers.

7. The method according to claim 6, **characterized in that** the assignments are stored until they are changed by a further assignment method which is started when the vehicle is started anew.

8. The method according to any one of the preceding claims, **characterized in that** for determining the rotation direction of the wheel, an acceleration sensor is used, in particular an acceleration sensor which responds to tangential accelerations of the wheel.

9. The method according to any one of the preceding claims, **characterized in that** as sensor which responds to impacts, an acceleration sensor is used, in particular an acceleration sensor which responds to radial accelerations of the wheel.

10. The method according to any one of the preceding claims, **characterized in that** in the wheel electronics a check is carried out as to whether the intensity of an impact signal delivered from the impact sensor exceeds a given threshold value and that only when this is the case is the transmitter of the wheel electronics caused to immediately emit a signal, in so far as the assignment method is not terminated.

11. The method according to Claim 10, **characterized in that** the threshold value is reduced when no impact signals are transmitted for a lengthy period of time, and that the threshold value is increased when the transmitted impact signals are frequently not correlated with an axle distance present in the vehicle.

12. The method according to Claim 11, **characterized in that** when also with a reduced threshold value no impact signals are transmitted from the wheel electronics for a period of some minutes, the impact sensors are switched off for a defined duration.

13. The method according to any one of the preceding claims, **characterized in that** further impact sensors are arranged on shock absorbers or wheel suspensions or springs of the vehicle, and only such impact signals are evaluated which are transmitted simultaneously from one of the further impact sensors preferably in a wired manner and from a wheel electronics wirelessly.

## Revendications

1. Procédé, destiné à affecter des identifications,
qui sont contenues dans des signaux, lesquels sont émis par des ensembles (ci-dessous appelés électroniques de roues) d'un système de supervision de la pression des pneumatiques d'un véhicule comportant au moins deux trains, qui sont montés sur des roues du véhicule sur lesquelles le véhicule se déplace,
concernant les positions des roues sur le véhicule,
les électroniques de roues comportant chacune plusieurs capteurs, dont l'un répond à la pression du pneumatique de la roue et un autre répond aux chocs qui se produisent sur la roue,
une mémoire avec l'identification individuelle mémorisée à l'intérieur de l'électronique de roues respective,
et un émetteur, lequel transmet à un récepteur qui est muni d'une antenne, ainsi que d'un système d'évaluation ou relié avec ces derniers, auxquels est amené par ailleurs un signal de vitesse qui indique la vitesse de conduite, des signaux qui ne concernent pas seulement l'identification individuelle de l'électronique de roues concernée, mais qui contiennent également l'information concernant la production d'un choc sur cette même roue ;
le procédé comporte les étapes suivantes, qui pour les roues du côté droit du véhicule, sont réalisées séparément des roues du côté gauche du véhicule :
le système d'évaluation
(a) détecte les identifications contenues dans les signaux,
(b) mesure la période entre des signaux de chocs, qui sont réceptionnés successivement,
(c) multiplie la période mesurée par une vitesse du véhicule mesurée dans cette même période et signalée au système d'évaluation,
(d) compare la longueur obtenue par ladite multiplication avec un écart donné entre deux trains du véhicule ;
(e) si la longueur concorde dans une tolérance prédéfinie avec l'empattement donné, le système d'évaluation affecte l'identification qui était contenue dans le signal qui contenait l'information sur le premier de deux chocs successivement détectés au train avant, vu dans la direction de conduite, et affecte l'identification qui était contenue dans le signal qui contenait l'information sur le deuxième des deux chocs successivement détectés au train arrière, vu dans la direction de conduite, et compte pour chaque identification les affectations au train avant, séparément des affectations au train arrière simultanément ou en chevauchement temporel avec les étapes (a) à (e) ;
(f) le système d'évaluation mesure l'intensité des signaux réceptionnés par ses soins ;
(g) compare les intensités de signaux, qui sont réceptionnés successivement et qui se différencient au niveau de leur identification ;
(h) affecte l'identification du signal, qui au résultat de la comparaison présente l'intensité la plus élevée au train sur lequel se trouve la roue dotée de l'électronique de roues pour le signal de laquelle en raison de la disposition donnée de l'antenne du récepteur et dans le cas d'une puissance émettrice identique des électroniques de roues, la probabilité est plus forte que le signal présentant la plus forte intensité émane d'une électronique de roues placée sur lui que de l'électronique de roues placée sur l'autre train ;
(i) compte pour chaque identification les affectations dérivées de la comparaison des intensités au train avant, séparément des affectations au train arrière ;
(k) compare pour chaque identification l'effectif de l'affectation à un certain train, à savoir aussi bien pour les affectations déterminées à l'étape (e) qu'également celles déterminées à l'étape (i) ;
(l) si dans les deux étapes (e) et (i) s'est détachée une tendance en faveur de l'une des affectations, ladite affectation est mémorisée dans une identification pour un certain train, et le procédé est poursuivi pour les autres identifications.

2. Procédé selon la revendication 1, **caractérisé par** les étapes supplémentaires suivantes :
(m) un capteur prévu dans les électroniques de roues fournit une information sur le sens de rotation de la roue respective, laquelle dans le signal qui contient l'identification individuelle de l'électronique de roues est transmise au récepteur ;
(n) le système d'évaluation détecte l'information sur le sens de rotation, sur la base de l'information détectée sur le sens de rotation, fait la différentiation entre les identifications qui appartiennent aux électroniques de roues sur des roues du côté gauche du véhicule et les identifications qui appartiennent aux électroniques de roues sur des roues du côté droit du véhicule, et différencie sur cette base des chocs qui lui sont signalés par des électroniques de roues sur le côté gauche du véhicule, de chocs qui lui sont signalés par des électroniques de roues sur le côté droit du véhicule.

3. Procédé selon la revendication 2, **caractérisé en ce que** chaque fois que le système d'évaluation détecte un signal de choc, le système d'évaluation ouvre une fenêtre de temps dont le début et la fin sont créés sous considération de la vitesse mesurée du véhicule, de sorte que l'identification dans un signal de choc successif, qui émane d'une roue sur le même côté du véhicule et qui se produit dans la fenêtre de temps ouverte soit affectée à une roue qui dans l'empattement donné est placée plus à l'avant sur le même côté du véhicule, à laquelle est affectée l'identification contenue dans le signal de choc provenant d'une électronique de roues placée sur le même côté du véhicule.

4. Procédé selon l'une quelconque des revendications précédentes, **caractérisé en ce que** si le système d'évaluation détecte simultanément deux signaux de choc, lesquels indiquent qu'ils émanent de deux roues à différent sens de rotation, les identifications transmises avec les deux signaux de chocs sont affectées à deux roues sur un train commun.

5. Procédé selon l'une quelconque des revendications précédentes, **caractérisé en ce que** pendant la conduite, un signal de sortie numérique d'un tachymètre électrique ou électronique du véhicule est amené constamment au système d'évaluation.

6. Procédé selon l'une quelconque des revendications précédentes, **caractérisé en ce que** les affectations sont créées de manière répétée et statistiquement évaluées **en ce que** des affectations qui remarquablement se produisent fréquemment sont sélectionnées et mémorisées dans une mémoire qui est prévue dans l'instrument d'évaluation ou en liaison avec l'instrument d'évaluation et **en ce que** le procédé d'affectation s'achève lorsque pour toutes les identifications réceptionnées, une affectation est mémorisée.

7. Procédé selon la revendication 6, **caractérisé en ce que** les affectations sont mémorisées aussi longtemps jusqu'à ce qu'elles soient modifiées par un procédé d'affectation supplémentaire, lancé lors d'un nouveau démarrage du véhicule.

8. Procédé selon l'une quelconque des revendications précédentes, **caractérisé en ce que** pour déterminer le sens de rotation de la roue, un capteur d'accélérations est utilisé, notamment un capteur d'accélérations qui répond à des accélérations tangentielles.

9. Procédé selon l'une quelconque des revendications précédentes, **caractérisé en ce qu'**en tant que capteur qui répond à des chocs est utilisé un capteur d'accélérations, notamment un capteur accélérations qui répond à des accélérations radiales.

10. Procédé selon l'une quelconque des revendications précédentes, **caractérisé en ce que** dans l'électronique de roues il est vérifié si l'intensité d'un signal de chocs fourni par le capteur de chocs dépasse une valeur seuil et **en ce qu'**uniquement si c'est le cas, l'émetteur de l'électronique de roues est incité à émettre immédiatement un signal, dans la mesure où le procédé d'affectation n'est pas achevé.

11. Procédé selon la revendication 10, **caractérisé en ce que** la valeur seuil est diminuée si sur un temps prolongé, aucun signal de choc n'est transmis, et **en ce que** la valeur de seuil est relevée si les signaux de choc transmis ne sont souvent pas en corrélation avec l'empattement présent dans un véhicule.

12. Procédé selon la revendication 11, **caractérisé en ce que** si même avec une valeur seuil diminuée, pendant quelques minutes, aucun signal de choc n'est transmis par une électronique de roues, les capteurs de choc sont désactivés pour une certaine durée.

13. Procédé selon l'une quelconque des revendications précédentes, **caractérisé en ce que** sur des amortisseurs ou sur des suspensions de roues ou sur des ressorts du véhicule sont placés des capteurs de choc supplémentaires, et que seuls sont évalués des signaux de choc qui sont transmis simultanément par l'un des capteurs de choc supplémentaires, de préférence par voie filaire et sans fil par une électronique de roue.
